Europäisches Patentamt

European Patent Office

Office européen des brevets

(19)

(11) Veröffentlichungsnummer: **0 266 705**
**B1**

(12) ## EUROPÄISCHE PATENTSCHRIFT

(45) Veröffentlichungstag der Patentschrift:
28.11.90

(51) Int. Cl.⁵: **B60K 15/04**

(21) Anmeldenummer: 87116019.8

(22) Anmeldetag: 31.10.87

(54) **Verschluss in Kraftfahrzeugen.**

(30) Priorität: 03.11.86 DE 3637289

(43) Veröffentlichungstag der Anmeldung:
11.05.88 Patentblatt 88/19

(45) Bekanntmachung des Hinweises auf die Patenterteilung:
28.11.90 Patentblatt 90/48

(84) Benannte Vertragsstaaten:
DE ES FR GB IT SE

(56) Entgegenhaltungen:
CH-A- 598 066
DE-A- 3 200 311
US-A- 1 949 523
US-A- 2 145 212

PATENT ABSTRACTS OF JAPAN, Band 8,
Nr. 28 (M-274)(1465) 7. Februar 1984; & JP - A
- 58 185 325 (Nissan) 29.10.1983

(73) Patentinhaber: Bayerische Motoren Werke
Aktiengesellschaft, Patentabteilung
AJ-30 Postfach 40 02 40 Petuelring 130,
D-8000 München 40(DE)

(72) Erfinder: Krause, Günter, Lena-Christ-Strasse 38,
D-8038 Gröbenzell(DE)

(74) Vertreter: Bullwein, Fritz, Bayerische Motoren Werke
Aktiengesellschaft
Postfach 40 02 40 Petuelring 130 AJ-33,
D-8000 München 40(DE)

**Beschreibung**

Die Erfindung bezieht sich auf einen Verschluß nach dem Oberbegriff des Patentanspruchs 1.

Bei derarigen Flüssigkeitsbehältern handelt es sich beispielsweise um den Kraftstofftank oder den Behälter für die Kühlflüssigkeit der Brennkraftmaschine. Andere Behälter können der Aufnahme des Motoröls, des Getriebeöls oder auch einer Reinigungsflüssigkeit dienen. Bei bekannten Verschlüssen besteht grundsätzlich die Gefahr, daß sie nicht ausreichend befestigt sind und während einer Fahrt verloren werden können. Es ist zwar ebenfalls bekannt, den Verschluß in einem Gehäuse anzuordnen, der durch eine Klappe, beispielsweise die sog. Tankklappe, verschlossen ist. Dies erfordert jedoch einen zusätzlichen Aufwand. Verstärkt werden die Schwierigkeiten insbesondere dann, wenn beabsichtigt ist, die Kraftstoffaufnahme zu vereinfachen une möglicherweise sogar zu automatisieren. Vorschläge in dieser Richtung finden sich beispielsweise in der DE-PS 29 29 192. Dabei besteht zusätzlich des Problem, den Verschluß so auszugestalten, daß er auf einfache Weise sowohl das Befüllen des Flüssigkeitsbehälters als auch das Verschließen der Zuleitung ermöglicht.

Der Erfindung liegt die Aufgabe zugrunde, einen Verschluß der eingangs genannten Art zu schaffen, der mit konstruktiv einfachen Mitteln die geschilderten Nachteile vermeidet und einen wesentlichen Beitrag zur Automatisierung der Kraftstoffaufnahme leistet.

Die Erfindung löst diese Aufgabe durch die kennzeichnenden Merkmale des Patentanspruches 1.

Die Unverlierbarkeit des Verschlusses stellt einen deutlichen Vorteil gegenüber den bekannten Verschlüssen dar, da eine ggf. offene Zuleitung jederzeit durch den stets vorhandenen Verschluß wieder geschlossen werden kann. Die Bewegbarkeit des Verschlusses zwischen der Schließ- und der Offenstellung, verbunden mit dem Zusammenspiel von Durchgangsöffnung und Zuleitungsöffnung bietet auf einfache Weise die Möglichkeit, trotz der Unverlierbarkeit des Verschlusses den beiden wesentlichen Aufgaben gerecht zu werden, die Zuleitungsöffnung ggf. völlig freizugeben bzw. auch wieder vollständig zu verschließen. Dies kann auf einfache Weise, ggf. auch mit Hilfe eines Manipulators, lediglich durch Bewegen des Verschlusses von einer Stellung in die andere geschehen.

Diese Bewegung kann sowohl eine Linear- als auch eine Rotationsbewegung sein. Letzteres bietet den Vorteil, gerade im Hinblick auf eine Bewegung des Verschlusses mit Hilfe eines Manipulators mit relativ geringem Kraftaufwand möglich zu sein und damit die Bewegung auch unter ungünstigen klimatischen Verhältnissen durchzuführen, bei denen die Bewegbarkeit des Verschlusses durch vergrößerte Reibungskräfte erschwert ist.

Die Bewegbarkeit des Verschlusses kann zusätzlich durch eine Markierung erleichtert sein, die an seinem Umfang in der Schließ- und in der Offenstellung freigegeben wird. Mit Hilfe eines geeigneten Aufnehmers für die Lage der Markierung und die durch den Verschluß freigegebene Gestalt der Markierung wird es möglich, die Bewegung vorzunehmen bzw. während einer Bewegung durch einen Manipulator zu steuern.

Gerade für letzteren Anwendungsfall ergibt sich eine weitere Verbesserung durch eine Anordnung des Verschlusses in einem Gehäuse, das nach außen durch eine für Strahlung definierter Wellenlänge durchlässige Klappe verschlossen ist. Die von einer geeigneten Einrichtung ausgesandte Strahlung durchdringt das für sichtbares Licht ggf. undurchlässige Material der Klappe und trifft auf einen geeigneten, beispielsweise innerhalb des Gehäuses angeordneten Sensor. Ergänzend kann eine Sende-/Empfangseinrichtung im Kraftfahrzeug vorgesehen sein, die das Auftreffen der Strahlung auf den Sensor signalisiert und zur Justierung des Manipulators Verwendung findet. Ergänzend kann durch den Sensor auch eine Öffnungsvorrichtung für die Klappe gesteuert werden, die den Zugriff des Manipulators auf den Verschluß freigibt.

In der Zeichnung ist ein Ausführungsbeispiel der Erfindung dargestellt. Est zeigt

Fig. 1 schematisch einen Verschluß gem. der Erfindung und

Fig. 2 einen Schnitt längs der punktierten Linie in Fig. 1, aus dem die Anordnung und die Arbeitsweise des Verschlusses weiter zu entnehmen ist.

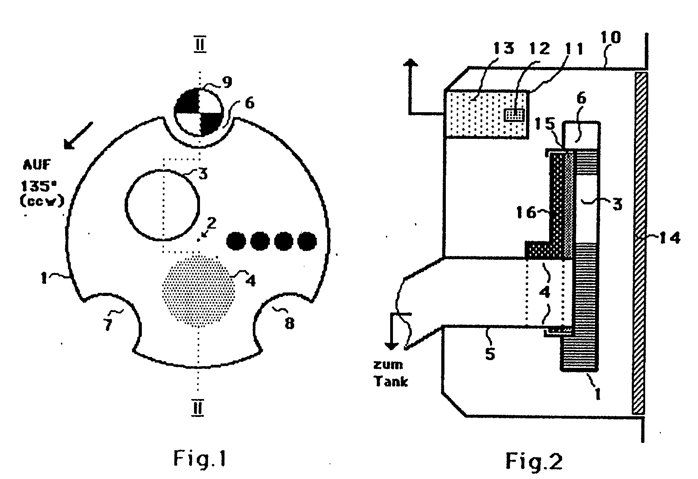

Die in Fig. 1 gezeigte Draufsicht auf eine erfindungsgemäßen Verschluß 1 läßt die wesentlichen Teile erkennen. Der Verschluß 1 ist drehbar um seine Mittelachse 2 angeordnet. Er besitzt eine Durchgangsöffnung 3, die in der in Fig. 1 dargestellten Schließstellung nicht fluchtend zur Öffnung 4 einer in Fig. 2 dargestellten Zuleitung 5 liegt. Am Rande besitzt der Verschluß 1 drei Einkerbungen 6,7 und 8 von denen die Einkerbung 6 eine ortsfeste Markierung 9 freigibt. Während die Einkerbung 7 lediglich der verbesserten Handhabung des Verschlusses 1 dient, läßt sich mit Hilfe der Einkerbungen 6 und 8 die Drehbewegung des Verschlusses 1 durch einen Manipulator automatisch steuern.

Hierzu wird der Verschluß 1, ausgehend von der Schließstellung in Fig. 1, entgegen dem Uhrzeigersinn um einen Winkel von z.B. 135° soweit gedreht, bis die Einkerbung 8 nach /Abschluß der Drehbewegung die Markierung 9 vollständig freigibt. Dieser Zustand kann mit Hilfe einer geeigneten Sensoirik, wie in Fig. 2 dargestellt, erfaßt werden. In dieser Drehlage des Verschlusses 1 fluchtet die Durchgangsöffnung 3 mit der Öffnung 4 der Zuleitung 5. Damit ist es möglich, Flüssigkeit, beispielsweise Kraftstoff, in die Zuleitung 5 durch die Durchtrittsöffnung 3 hindurch in die Zuleitung 5 und über diese in einen daran angeschlossenen, nicht dargestellten Vorratstank einzufüllen. Nach Beendigung der Befüllung ist der Verschluß 1 im Uhrzeigersinn wieder in die Schlieüstellung zurückzudrehen, dabei gibt die Einkerbung 6 erneut die Markierung 9 frei. Die Öffnung 4 ist dabei wieder luftdicht verschlossen.

Der in Fig. 2 gezeigte Schnitt längs der Linie 11-11 in Fig. 1 zeigt den Querschnitt des Verschlusses 1 sowie dessen konstruktive Details sowie zusätzlich ein Gehäuse 10, in dem eine Sensorik 11 zur Steuerung einer manipulatorischen Bewegung des Verschlusses 1 untergebracht ist.

Die Sensorik 11 besteht aus einer für Strahlung definierter Wellenlänge empfindlichen Empfänger 12, der in einen Träger 13 eingebettet ist. Dem Empfänger 12 ist eine nicht dargestellte Elektronik nachgeschaltet, die eine ebenfalls nicht gezeigte Vorrichtung zum Öffnen einer Klappe 14 des Gehäuses 10 steuert.

Die Klappe 14 ist für z.B. elektromagnetische Strahlung definierter Wellenlänge, beispielsweie infrarotes Licht, durchlässig und für sichtbares Licht undurchlässig. Für das menschliche Auge erscheint die Klappe 14 daher undurchsichtig. Wird nun Strahlung der vorgegebenen Wellenlänge, im angenommenen Fall infrarotes Licht, durch die Klappe 14 geschickt, so fällt es auf den Empfänger 12. Entsprechend der Stellung des für diese Strahlung undurchlässigen Verschlusses 1 fällt nun eine variable Strahlungsmenge auf den Empfänger 12. In der in Fig. 1 gezeigten Schließstellung des Verschlusses 1 ist diese Strahlungsmenge am größten. Dasselbe gilt nach Verdrehen des Verschlusses 1 in die Offenstellung in der Einkerbund 8 einen ungehinderten Einfall der Strahlung auf den Empfänger 12 ermöglicht. In Drehlagen des Verschlusses 1 zwischen der in Fig. 1 gezeigten Schließstellung und der Offenstellung ist die Strahlungsmenge wesentlich geringer. Damit ist es möglich, über die Sensorik 11 nicht nur die Öffnungsbewegung der Klappe 14, sondern auch eine ggf. vorhandene manipulatorische Drehbewegung des Verschlusses 1 zu steuern.

Weitere konstruktive Details des Verschlusses 1 gehen aus Fig. 2 hervor. So ist eine Dichtmanschette 15 zu erkennen, die auf der Rückseite des Verschlusses 1 zwischen diesem und einer Trägerplatte 16 angeordnet ist. Die Dichtmanschette 15 und die Trägerplatte 16 sind nicht drehbar. Bei der Drehbewegung des Verschlusses 1 erfolgt somit eine relative Drehbewegung zwischen diesem und der Dichtmanschette 15. Damit ist während der gesamten Drehbewegung des Verschlusses 1 ein Entweichen von Flüssigkeitsdämpfen oder dgl. aus dem Flüssigkeitstank bzw. ein Eindringen atmosphärischer Luft in den Tank vermieden. Eine ggf. vorgesehene Tankbe- und Entlüftung ist der Übersichtlichkeit halber nicht dargestellt.

Der Verschluß 1 ermöglicht somit, das Öffnen und Verschließen der Öffnung 4 der Zuleitung 5 manuell und ggf. auch automatisch vorzunehmen. Die unverlierbare Anordnung des Verschlusses 1 ermöglicht die ggf. versehentlich unverschlossene Öffnung 4 jederzeit problemlos zu verschließen.

## Patentansprüche

1. Verschluß für eine Zuleitung eines Flüssigkeitsbehälters in Kraftfahrzeugen, der vor der Zufuhr von Flüssigkeit in die Zuleitung aus einer Schließstellung in eine Offenstellung und anschließend daran erneut in die Schließstellung bewegbar ist, dadurch gekennzeichnet, daß der Verschluß (1) unverlierbar auf der Zuleitung (5) sitzt, daß der Verschluß (1) eine der Zuleitungsöffnung (4) entsprechende Durchgangsöffnung (3) besitzt und daß die Durchgangsöffnung (3) in der Offenstellung mit der Zuleitung (5) fluchtend und in der Schließstellung außerhalb der Zuleitungsöffnung angeordnet ist.

2. Verschluß nach Anspruch 1, dadurch gekennzeichnet, daß die Bewegung des Verschlusses (1) im wesentlichen eine Drehbewegung um eine Achse (2) ist, die zumindest annähernd parallel zur Ausrichtung der Zuleitung (5) ist.

3. Verschluß nach Anspruch 1 oder 2, dadurch gekennzeichnet, daß der Verschluß (1) an seinem Umfang eine Markierung (9) sowohl in der Schließals auch in der Offenstellung freigibt.

4. Verschluß nach einen der Ansprüche 1 bis 3, dadurch gekennzeichnet, daß der Verschluß (1) in einem Gehäuse (10) angeordnet ist, das nach außen durch eine für Strahlung definierter Wellenlänge durchlässige Klappe (14) verschlossen ist.

5. Verschluß nach Anspruch 4, gekennzeichnet durch einen Sensor (11) für Strahlung definierter Wellenlänge mit einer nachgeschalteten Auswerteelektronik, die eine Öffnungsvorrichtung für die Klappe (14) steuert und die Drehbewegung des Verschlusses (1) überwacht.

## Claims

1. A closure for a supply conduit of a liquid container in motor vehicles, which is movable, before the supply of liquid into the supply conduit, out of a closed position into an open position and thereupon into the closed position again, characterised in that the closure (1) is non-losably seated on the supply conduit (5), in that the closure (1) possesses a passage opening (3) corresponding to the supply conduit opening (4) and in that the passage opening (3) is aligned with the supply conduit (5) when in the open position and is arranged outside the supply conduit opening when in the closed position.

2. A closure according to Claim 1, characterised in that the movement of the closure (1) is essentially a rotating movement about an axis (2) which is at least approximately parallel to the orientation of the supply conduit (5).

3. A closure according to Claim 1 or 2, characterised in that the closure (1) uncovers a marking (9) on its circumference both in the closed and in the open positions.

4. A closure according to any one of Claims 1 to 3, characterised in that the closure (1) is arranged in a housing (10) which is closed to the exterior by a flap (14) permeable to radiation of defined wave length.

5. A closure according to Claim 4, characterised by a sensor (11) for radiation of specific wave length with a following evaluation electronic system which controls an opening device for the flap (14) and monitors the rotating movement of the closure (1).

## Revendications

1. Fermeture pour une conduite d'alimentation d'un réservoir de liquide dans des véhicules à moteur, laquelle avant l'introduction du liquide dans la conduite d'amenée peut être déplacée d'une position de fermeture à une position d'ouverture et ensuite à nouveau à la position de fermeture, caractérisée en ce que la fermeture (1) est située de façon imperdable sur la conduite d'amenée (5), en ce que la fermeture (1) comprend une hauteur libre (3) correspondant à l'orifice de la conduite d'alimentation (4) et en ce que la hauteur libre (3) est placée centrée sur la conduite d'alimentation (5) en position ouverte et à l'extérieur de l'orifice de la conduite d'alimentation en position fermée.

2. Fermeture selon la revendication 1, caractérisée en ce que le mouvement de la fermeture (1) est essentiellement un mouvement de rotation sur un axe (2), qui est au moins approximativement parallèle à l'orientation de la conduite d'alimentation (5).

3. Fermeture selon une des revendications 1 ou 2, caractérisée en ce que la fermeture (1) laisse libre sur son pourtour un repère (9) aussi bien en position fermée qu'en position ouverte.

4. Fermeture selon une des revendications 1 à 3, caractérisée en ce que la fermeture (1) est placée dans un boîtier (10), fermé vers l'extérieur par un clapet (14) laissant passer un rayonnement de longueur d'onde définie.

5. Fermeture selon la revendication 4, caractérisée par un capteur (11) pour rayonnement de longueur d'onde définie comprenant, branché en aval une électronique d'évaluation, qui commande un dispositif d'ouverture du clapet (14) et contrôle le mouvement de rotation de la fermeture (1).

Fig.1

AUF
135°
(ccw)

Fig.2

zum
Tank